# EUROPEAN PATENT SPECIFICATION

(11) **EP 1 545 733 B1**
(45) Date of publication and mention of the grant of the patent: **03.01.2007**
(21) Application number: 03792202.8
(22) Date of filing: 16.07.2003
(51) Int. Cl.: B01D 9/00, C01D 3/24, C01D 3/14

(54) **PROCESS TO MAKE HIGH-PURITY SALT AND ITS USE IN ELECTROLYSIS PROCESSES**
VERFAHREN ZUR HERSTELLUNG VON HOCHREINEM SALZ UND SEINE VERWENDUNG IN ELEKTROLYSEVERFAHREN
PROCEDE DE PRODUCTION D'UN SEL TRES PUR ET SON UTILISATION DANS DES PROCESSUS D'ELECTROLYSE

(30) Priority: 08.08.2002 US 402020 P
(43) Date of publication of application: 29.06.2005
(73) Proprietor: Akzo Nobel N.V., 6824 BM Arnhem (NL)
(72) Inventor: MAYER, Mateo, Jozef, Jacques, NL-3811 BJ Amersfoort (NL); GEERTMAN, Robert, Michael, NL-6836 PL Arnhem (NL); DEMMER, René, Lodewijk, Maria, NL-7468 GG Enter (NL)
(74) Representative: Schalkwijk, Pieter Cornelis
(86) International application number: PCT/EP2003/007692
(87) International publication number: WO 2004/018068

(56) References cited:
- DE-C- 881 190
- US-A- 3 148 023
- US-A- 4 026 676
- PATENT ABSTRACTS OF JAPAN vol. 013, no. 402 (C-633), 6 September 1989 (1989-09-06) & JP 01 145320 A (JAPAN TOBACCO INC), 7 June 1989 (1989-06-07)

## Description

The present invention relates to a process to make salt (sodium chloride) of high purity, as well as to the use of the resulting high-purity salt to make brine, a solution of said salt in water, for electrolysis operations, the electrolysis process preferably involving membrane cells.

Salt and wet salt have long been known. The conventional process to make said salt is an evaporative crystallisation of brine, followed by washing and drying steps. Said brine is typically produced by dissolving a natural source of NaCl in water. The brine will also contain K, Br, SO₄, and/or Ca, which moieties are typically present in the source of NaCl. A disadvantage of the conventional process is that the salt obtained has imperfections in the crystal lattice and contains occlusions, *i.e.* small pockets of mother liquor of the evaporative crystallisation process (present in cavities in the salt crystals). Due to these imperfections and occlusions, the (wet) salt, as well as the brine produced therefrom, is contaminated with compounds present in the mother liquor. In particular, the amount of K, Br, SO₄ and/or Ca that is carried over is quite high. DE 881 190C discloses a process for the manufacture of salt by evaporating a brine, wherein a modifying agent is added to modify the crystal growth in the centres of the faces of the crystal, thus causing crystallisation of salt as hollow faced cubes or hollow-faced octahedra. Hitherto, additional washing steps and drying steps, such as energy-consuming centrifuge steps, have been employed to reduce the levels of contaminants. Especially if a brine produced from the salt or wet salt is to be used in modern membrane electrolysis cells, said contaminants are known to lead to less economic electrolysis operations. After all, as the salt or wet salt contains more contaminants, the waste disposal of the electrolysis company will increase.

For these reasons, there is a need for improved salt and wet salt having a lower level of contaminants, which can be produced more cost-effectively and which can be used to make a brine for electrolysis processes.

The object of the present invention is to provide an evaporative crystallisation process to make high-purity salt compositions that includes a step wherein a mother liquor comprising a crystal growth inhibitor is formed which is effective, commercially attractive, and preferably food grade. Furthermore, it was an object of the present invention to improve the free flowing properties of the so-obtained salt.

Surprisingly, we have now found that salt compositions can be produced with a reduced level of K, Br, SO₄ and/or Ca and using less washing water or wash brine in the washing operations. This means that the energy efficiency of the salt production process will increase. The process to make such high-purity salt compositions is characterised in that during the evaporative crystallisation process the mother liquor contains an effective amount of a crystal growth inhibitor comprising at least one saccharide or saccharide derivative, to form salt crystals. Said salt can be washed with a reduced amount of washing water while still containing lower amounts of K, Br, SO₄ and/or Ca. After drying, the improved salt composition is obtained. A wet salt can be obtained by omitting the drying step or by only partially drying the salt crystals.
In addition, we found that when using the saccharide or saccharide derivative-comprising crystal growth inhibitor according to the present invention in the process of making high-purity salt compositions, the free flowing properties of salt crystals could be improved by changing the shape of the crystals. Furthermore, it was found that the crystal size distribution could be adjusted by using the crystal growth inhibitor according to the invention in the preparation process.

The term "high-purity salt" as used throughout the specification is meant to denote salt which is crystallised from a brine using a crystal growth inhibitor, wherein the K and/or Br and/or SO₄ and/or Ca content is at least 5% lower than in the case of salt crystallised from said brine without using a crystal growth inhibitor. Accordingly, by "an effective amount of a crystal growth inhibitor" is meant that the crystal growth inhibitor according to the present invention is present in the mother liquor in such an amount that the K and/or Br and/or SO₄ and/or Ca content in the salt crystallised therefrom is at least 5% lower than in the case of salt crystallised from said mother liquor without using said crystal growth inhibitor.

The crystal growth inhibitor according to the invention comprises at least one saccharide or saccharide derivative. The term "saccharide" as used throughout the specification is meant to include monosaccharides (*i.e.* carbohydrates which usually possess 3-9 carbon atoms) and oligosaccharides. The term "oligosaccharides" stands for carbohydrates which possess 2-20 monosaccharide units. Preferably, monosaccharides or oligosaccharides comprising 2-10 monosaccharide units are employed in the process according to the invention. "Carbohydrate" is used in its usual annotation to denominate products of the formula C*ₓ*(H₂O)*_{y}.*

Derivatives of said saccharides can also be used in the process according to the present invention. Derivatised saccharides are preferably selected from the group consisting of dehydrated saccharides, esterified saccharides, saccharides bearing one or more phosphate groups, one or more phosphonate groups, one or more phosphino groups, one or more sulfate groups, one or more sulfonate groups, and/or one or more amino groups, alkali, alkaline earth or transition metal salts of derivatised saccharides, and alkali, alkaline earth or transition metal salts of saccharides. More preferably, saccharides are selected from the group consisting of dehydrated saccharides, esterified saccharides, and alkali or alkaline earth salts of (derivatised) saccharides. Even more preferably, the derivatised saccharide is an esterified saccharide. But most preferably, the crystal growth inhibitor according to the invention comprises an underivatised saccharide.

Suitable monosaccharides are for example glucose, fructose, galactose, mannose, arabinose, xylose, lyxose, ribose, and their derivatives. Suitable oligosaccharides are for example sucrose, lactose, maltose, raffinose, inulin, and derivatives thereof. Saccharides which can be used according to the invention also include (partially) oxidised saccharides and derivatives thereof. Examples of preferred oxidised (derivatised) saccharides comprise galactaric acid, gluconic acid, mannonic acid, and derivatives thereof. In a preferred embodiment, a solution comprising at least one saccharide or saccharide derivative in water is used as crystal growth inhibitor. For example, orange juice can be used for this purpose.

The (derivatised) saccharides can be in the open form or in the α- or β-ring form. When the ring is open, the (derivatised) saccharide is a ketone or an aldehyde, generally referred to as a ketose and an aldose, respectively.

It is also possible to use a crystal growth inhibitor comprising at least one metal complex of the saccharide or saccharide derivative as defined above in the process of preparing the high-purity salt compositions according to the invention. Preferably, calcium and/or iron complexes are applied. If iron is used as the metal, both di- and tri-valent ions (ferro- and ferri-ions, respectively) can be used with success. Calcium is preferably in its +2 state. The metal complexes which can be used according to the invention can be mononuclear or dinuclear. In the latter case, two metal ions are complexed by two (derivatised) saccharide molecules. Polynuclear metal - (derivatised) saccharide complexes can be used as well. When iron is used as the metal, dinuclear complexes are often formed. Generally, an oxo-group or a hydroxyl group forms a bridge between the two iron centres.

The use of crystal growth inhibitors comprising at least one saccharide or saccharide derivative in the evaporative process of producing salt compositions has several advantages. First, the use of (derivatised) saccharides opens up the possibility of preparing food grade crystal growth inhibitors. The (derivatised) saccharides are usually inexpensive and readily available, which makes them commercially attractive. Furthermore, they do not contain any CH₂ or CH₃ groups. The presence of such groups is known to result in the formation of undesired chloroform and/or other chlorinated organic compounds in electrolysis operations. Furthermore, the crystal growth inhibitors comprising at least one saccharide or saccharide derivative according to the present invention can be used in relatively low amounts.
It is noted that the (derivatised) saccharides are also effective as a food grade CaCO₃ scale inhibitor in the salt production process at concentrations typically below 5 to 10 ppm.

It is noted that the term "salt" as used throughout this document is meant to denominate all types of salt of which more than 25% by weight is NaCl. Preferably, such salt contains more than 50% by weight of NaCl. More preferably, the salt contains more than 75% by weight of NaCl, while a salt containing more than 90% by weight of NaCl is most preferred. The salt may be solar salt (salt obtained by evaporating water from brine using solar heat), rock salt, and/or a subterraneous salt deposit. Preferably, it is a subterraneous salt deposit exploited by means of dissolution mining.

The term wet salt is used to denominate sodium chloride containing a substantial amount of water. More particularly, it is a water-containing salt of which more than 50% by weight consists of NaCl. Preferably, such salt contains more than 90% by weight of NaCl. More preferably, the salt contains more than 92% of NaCl, while a salt of essentially NaCl and water is most preferred. The wet salt will contain more than 0.5, preferably more than 1.0, more preferably more than 1.5% by weight of water. Preferably, it contains less than 10% by weight, more preferably less than 6% by weight, and most preferably less than 4% by weight of water. Typically, the salt will contain 2-3% by weight of water. All of the weight percentages given are based on the weight of the total composition. Said wet salt can be dried in conventional manners to obtain dried salt.

When a crystal growth inhibitor comprising at least one saccharide or saccharide derivative is used in the evaporative crystallisation process according to claim 1 of the present invention, a high-purity salt is produced which has a bulk density exceeding 0.7 g/cc. Preferably, the produced high-purity salt has a bulk density below 2.5 g/cc, more preferably below 2.0 g/cc. Depending on the (derivatised) saccharide used and the process conditions used, a high-purity salt comprising preferably octrahedrally shaped crystals, *i.e.* salt in which the crystals have a (111) face, can be obtained. Said octahedral salt has a reduced number of occlusions and less occluded mother liquor compared to the cubic crystals formed in the absence of the crystal growth inhibitor. Due to this lower number of lattice imperfections and less occluded mother liquor, the K, Br, SO₄ and/or Ca levels were lowered preferably by more than 5%, more preferably by more than 10%, even more preferably by more than 15%, and most preferably by more than 20% compared to the levels in salt produced from the same salt solution under the same conditions, but without the addition of a crystal growth inhibitor. It was also found that washing octahedral salt crystals was more efficient than washing cubic salt crystals, so that the amount of washing water could be reduced. As a result, less salt is dissolved during the washing step, increasing both the salt production rate and the energy efficiency of the process. Said high-purity octahedral salt is produced in the evaporative crystallisation process according to the invention when a sufficient amount of a suitable crystal growth inhibitor comprising at least one (derivatised) saccharide is present in the mother liquor. A sufficient amount of the suitable crystal growth inhibitor is present if any crystals with a (111) face show up in one of the two following tests. In the first test, a certain amount of the crystal growth inhibitor is added to a glass beaker of 1,000 ml equipped with a magnetic stirrer bar and containing 450 ml of demineralised water and 150 g of high-purity NaCl (pharmaceutical grade). The beaker is covered with a glass plate, but the covering is such that the gas phase inside the beaker is in direct unrestricted contact with the air. The beaker is then heated to reflux conditions (about 110°C). The heat input is selected such that within a period of 15 to 60 minutes about 2 to 10 g of salt are crystallised. The crystals are separated from the mother liquor, e.g. by centrifuging, and dried. For this test, the level of drying is not crucial, as long as the crystals are not (re)dissolved or altered, e.g. by mechanical forces. If analysis by means of a (light) microscope shows crystals with (111) faces, a sufficient amount of crystal growth inhibitor has been used. For some (derivatised) saccharides, however, it was found that unacceptably high loads of said (derivatised) saccharides are needed in order to obtain octahedrally shaped crystals.

The other test which can be used to determine whether a sufficient amount of crystal growth inhibitor is present for the production of high-purity, octahedral salt during evaporative crystallisation is as follows. In a measuring glass, about 200 ml of a saturated salt solution with a temperature of 60°C is stirred with a magnetic stirrer. Subsequently an amount of a crystal growth inhibitor according to the invention is added to the saturated salt solution and dissolved. The solution is placed in a fume hood and after cooling down to 20°C and 2 days of water evaporation at 20°C, the crystals are analysed. If analysis by means of a (light) microscope shows crystals with (111) faces, a sufficient amount of crystal growth inhibitor has been used.

Preferably, the amount of crystal growth inhibitor present in the mother liquor of the evaporative crystallisation process is less than 50,000 mg per kg of mother liquor. Preferably, less than 20,000 mg/kg, more preferably less than 5,000 mg/kg, even more preferably less than 1,500 mg/kg, and most preferably less than 300 mg/kg is used per kg of mother liquor. Typically, more than 10 mg, preferably more than 12.5 mg, and most preferably more than 14 mg of crystal growth inhibitor is used per kg of mother liquor of the evaporative crystallisation process. At these concentrations of crystal growth inhibitor, depending on the process conditions, high-purity salt, for example in the form of cubic salt or spherical salt, and preferably, in the form of octahedral salt, can be formed.

It is noted that the crystal growth inhibitor according to the invention functions as an anti-foaming agent already at concentrations as low as approximately 10 mg, preferably 25 mg, most preferably 50 mg, per kg of mother liquor. Moreover, at concentrations higher than approximately 1,500 mg per kg of mother liquor, the crystal growth inhibitor according to the present invention functions as a non-corrosion agent.

(Wet) high-purity salt according to the present invention is preferably used to prepare brine for electrolysis processes and most preferably for the modern membrane electrolysis processes. The high-purity salt produced in the above-described manner can also be used for consumption purposes. It is for instance suitable as table salt. In the latter application, it is convenient to have crystals with good fluidity. Hence, another object of the invention was to improve the free flowing properties of the high-purity salt.

We have found that the use of a crystal growth inhibitor comprising at least one saccharide or saccharide derivative in the evaporative process not only resulted in a salt with improved purity, but depending on the choice of the (derivatised) saccharide and the process conditions, the shape of the crystals could be altered as well. It appeared that spherical instead of octahedral crystals could be obtained by using a (derivatised) saccharide-containing crystal growth inhibitor as defined above in the evaporative process and for instance a higher process temperature. Spherical crystals can also be obtained by using smaller amounts of the (derivatised) saccharide-containing crystal growth inhibitor than those which yield octahedrally shaped crystals.

According to a non-binding theory, the mechanism of the formation of spherical crystals is as follows. Under the usual process conditions, in other words without the addition of a crystal growth inhibitor, octahedral crystal faces, *i.e.* the (111) faces, will grow at a faster rate than cubic crystal faces. Hence, cubic-shaped crystals will be formed. However, when the growth of said octahedral faces is inhibited, for example by adding the crystal growth inhibitor according to the present invention, the shape of the crystals will change from cubic to octahedral. When the growth of the (111) faces is merely retarded instead of inhibited, a transition situation will arise in which the salt is neither cubic nor octahedral. In said transition situation, the crystals are approximately spherically shaped.

Because of said approximate spherical shape of the crystals, mutual close contact among the faces of the salt particles is decreased and this in turn leads to excellent flowability. The spherical high-purity salt according to the invention is therefore particularly suitable for consumption purposes. Preferably, it is used as table salt.

It is noted that it is known that the addition of certain chemicals to the mother liquor in the evaporative process can influence the crystal form of the salt and the formation of occlusions in the salt. Lead chloride, cadmium chloride, and manganese sulfate, for instance, have been reported to reduce the number of cavities, and consequently the number of occlusions and the quantity of occluded mother liquor, when added to the evaporative crystallising mass. However, such chemicals are undesired. Not only can they adversely affect the electrolysis operations, they may also spill over into table salt produced using the same installation, which as a rule is undesired.
JP A-01-145319 and JP-A-01145320 describe the use of sodium hexametaphosphate and polyacrylate, respectively, in an evaporative crystallisation process to make dried polyhedral salt with an improved flowability that can be used to improve the marketing of product to which the dried salt is fixed. Said dried salt is known to contain less than 0.5% of water.
US 5,021,079 concerns the production of sodium chloride in a flat tetrahedronal crystal form by treating an aqueous solution of sodium chloride with a particular iron-containing catalyst solution. The catalyst solution is prepared by the addition of ferric chloride to an aqueous solution obtained by treating cristobalite with an aqueous mineral acid. The solution further comprises a saccaride such as sucrose and sodium bichromate or the like. There is no disclosure that the catalyst solution can be used to make (wet) salt with a reduced level of K, Br, SO₄ and/or Ca in a more economic way.

It was also found that by adding the crystal growth inhibitor according to the invention to the mother liquor during the production process of salt, the crystal size distribution could be influenced. It appeared that the way in which the crystal growth inhibitor is measured out during the production process is of crucial importance for determining the crystal size distribution. It was found that when the crystal growth inhibitor was added to the mother liquor in portions, increasing amounts of small crystals and increasing amounts of large crystals could be obtained. The crystal size distribution could be determined upon analysis by means of a light microscope. In addition, it was observed that increasing amounts of crystal growth inhibitor in the mother liquor resulted in the production of smaller crystals. Preferably, the d50 crystal diameter, *i.e.* the diameter at which 50wt% of the crystals have a larger crystal diameter and 50wt% of the crystals have a smaller crystal diameter, can be shifted by more than 10% compared to the size of crystals grown in the absence of a crystal growth inhibitor just by adapting the amounts of crystal growth inhibitor in the mother liquor.

### Experimental

The following procedure was applied for the production of octahedral salt during evaporative crystallisation. In a measuring glass, about 200 ml of a saturated salt solution with a temperature of 60°C was stirred with a magnetic stirrer. Subsequently 30 mg d(+) sucrose was added to the saturated salt solution and dissolved. The solution was placed in a fume hood and after cooling down to 20°C and 2 days of water evaporation at 20°C, the crystals were studied by light microscopy. It was observed that NaCl crystals with (111) faces had been formed.

Since it required hardly any purification, the wet salt so obtained was pre-eminently suited for use in electrolysis processes. This is of particular importance for electrolysis operations where membrane cells are used. Furthermore, it was observed that the wet salt could be submitted to an extra drying step to make the known high-purity dried salt. Such high-purity dried salt can, for example, be used as a pharmaceutical grade salt.

In another experiment, 100 ppm of orange juice was added to the mother liquor in the evaporative process. The experiment was performed as described above and the obtained salt crystals were investigated by light microscopy. It was observed that predominantly spherical salt crystals were obtained.

## Claims

1. Evaporative crystallisation process to make salt compositions which includes a step wherein a mother liquor is formed containing an effective amount of a crystal growth inhibitor comprising at least one saccharide or saccharide derivative and wherein the effective amount of crystal growth inhibitor is less than 50,000 mg per kg of mother liquor, to form an octahedral or spherical high-purity salt wherein the K and/or Br and/or SO₄ and/or Ca content is at least 5% lower than in salt crystallised from the same mother liquor but without using a crystal growth inhibitor.

2. Process according to claim 1 further including a washing step for the crystallised salt.

3. Process according to either of the preceding claims further including a drying step for the salt such that a salt or a wet salt is produced.

4. Process according to any one of the preceding claims wherein the saccharide or saccharide derivative is present in its native form or in an oxidised form.

5. Process according to any one of the preceding claims wherein the saccharide derivative is selected from the group consisting of dehydrated saccharides, esterified saccharides, saccharides bearing one or more phosphate groups, one or more phosphonate groups, one or more phosphino groups, one or more sulfate groups, one or more sulfonate groups, and/or one or more amino groups, alkali, alkaline earth or transition metal salts of derivatised saccharides, and alkali, alkaline earth or transition metal salts of saccharides.

6. Process according to claim 4 wherein the crystal growth inhibitor comprises a Ca and/or Fe salt of the saccharide or saccharide derivative.

7. Process according to any one of the preceding claims wherein the crystal growth inhibitor comprises at least one (derivatised) saccharide selected from the group consisting of glucose, fructose, galactose, mannose, arabinose, xylose, lyxose, ribose, sucrose, lactose, maltose, raffinose, inulin, galactaric acid, gluconic acid, mannonic acid, and derivatives thereof.

8. Use of a brine produced with salt resulting from the process of any one of the preceding claims in electrolysis processes.

9. Use of a brine according to claim 8 in a membrane electrolysis cell.

10. Use of the salt resulting from the process of any one of claims 1 - 7 for consumption purposes.

## Patentansprüche

1. Evaporatives Kristallisationsverfahren zur Herstellung von Salzzusammensetzungen, das einen Schritt umfasst, bei dem eine Mutterlauge gebildet wird, die eine wirksame Menge eines Kristallwachstumsinhibitors enthält, der wenigstens ein Saccharid oder Saccharidderivat umfasst, wobei die wirksame Menge des Kristallwachstumsinhibitors kleiner als 50 000 mg pro kg Mutterlauge ist, wobei ein oktaedrisches oder sphärisches hochreines Salz entsteht, wobei der K- und/oder Br- und/oder SO₄- und/oder Ca-Gehalt um wenigstens 5% geringer ist als in Salz, das aus derselben Mutterlauge, aber ohne Verwendung eines Kristallwachstumsinhibitors kristallisiert wird.

2. Verfahren gemäß Anspruch 1, das weiterhin einen Waschschritt für das kristallisierte Salz umfasst.

3. Verfahren gemäß einem der vorstehenden Ansprüche, das weiterhin einen Trocknungsschritt für das Salz umfasst, so dass ein Salz oder feuchtes Salz hergestellt wird.

4. Verfahren gemäß einem der vorstehenden Ansprüche, wobei das Saccharid oder Saccharidderivat in seiner nativen Form oder in einer oxidierten Form vorhanden ist.

5. Verfahren gemäß einem der vorstehenden Ansprüche, wobei das Saccharidderivat aus der Gruppe ausgewählt ist, die aus dehydratisierten Sacchariden, veresterten Sacchariden, Sacchariden, die eine oder mehrere Phosphatgruppen, eine oder mehrere Phosphonatgruppen, eine oder mehrere Phosphinogruppen, eine oder mehrere Sulfatgruppen, eine oder mehrere Sulfonatgruppen und/oder eine oder mehrere Aminogruppen tragen, Alkali-, Erdalkali- oder Übergangsmetallsalzen von derivatisierten Sacchariden sowie Alkali-, Erdalkali- oder Übergangsmetallsalzen von Sacchariden besteht.

6. Verfahren gemäß Anspruch 4, wobei der Kristallwachstumsinhibitor ein Ca- und/oder Fe-Salz des Saccharids oder Saccharidderivats umfasst.

7. Verfahren gemäß einem der vorstehenden Ansprüche, wobei der Kristallwachstumsinhibitor wenigstens ein (derivatisiertes) Saccharid umfasst, das aus der Gruppe ausgewählt ist, die aus Glucose, Fructose, Galactose, Mannose, Arabinose, Xylose, Lyxose, Ribose, Saccharose, Lactose, Maltose, Raffinose, Inulin, Schleimsäure, Gluconsäure, Mannonsäure und Derivaten davon besteht.

8. Verwendung einer Salzlösung, die mit Salz hergestellt ist, das aus dem Verfahren gemäß einem der vorstehenden Ansprüche resultiert, in Elektrolyseverfahren.

9. Verwendung einer Salzlösung gemäß Anspruch 8 in einer Membranelektrolysezelle.

10. Verwendung des Salzes, das aus dem Verfahren gemäß einem der Ansprüche 1 bis 7 resultiert, zu Verzehrzwecken.

## Revendications

1. Procédé de cristallisation par évaporation pour préparer des compositions salines qui comprend une étape dans laquelle une liqueur mère est formée contenant une quantité effective d'un inhibiteur de croissance cristalline comprenant au moins un saccharide ou un dérivé de saccharide et dans lequel la quantité effective d'inhibiteur de croissance cristalline est inférieure à 50 000 mg par kg de liqueur mère, afin de former un sel octaédrique ou sphérique de pureté élevée dans lequel la teneur en K et/ou Br et/ou SO₄ et/ou Ca est au moins 5 % plus faible que celle dans le sel obtenu par cristallisation à partir de la même liqueur mère mais sans utiliser un inhibiteur de croissance cristalline.

2. Procédé selon la revendication 1 comprenant en outre une étape de lavage du sel cristallisé.

3. Procédé selon l'une quelconque des revendications précédentes comprenant en outre une étape de séchage du sel de telle sorte qu'un sel ou un sel humide soit produit.

4. Procédé selon l'une quelconque des revendications précédentes dans lequel le saccharide ou le dérivé de saccharide est présent sous sa forme native ou une forme oxydée.

5. Procédé selon l'une quelconque des revendications précédentes dans lequel le dérivé de saccharide est choisi dans le groupe comprenant les saccharides déshydratés, les saccharides estérifiés, les saccharides portant un ou plusieurs groupes phosphates, un ou plusieurs groupes phosphonates, un ou plusieurs groupes phosphino, un ou plusieurs groupes sulfates, un ou plusieurs groupes sulfonates, et/ou un ou plusieurs groupes amino, les sels de métaux alcalins, alcalino-terreux ou de transition de saccharides dérivés, et les sels de métaux alcalins, alcalino-terreux ou de transition de saccharides.

6. Procédé selon la revendication 4 dans lequel l'inhibiteur de croissance cristalline comprend un sel de Ca et/ou de Fe du saccharide ou du dérivé de saccharide.

7. Procédé selon l'une quelconque des revendications précédentes dans lequel l'inhibiteur de croissance cristalline comprend au moins un saccharide (dérivé) choisi dans le groupe comprenant le glucose, le fructose, le galactose, le mannose, l'arabinose, le xylose, le lyxose, le ribose, le sucrose, le lactose, le maltose, le raffinose, l'inuline, l'acide galactarique, l'acide gluconique, l'acide mannonique, et leurs dérivés.

8. Utilisation d'une saumure produite avec un sel résultant du procédé de l'une quelconque des revendications précédentes dans des processus électrolytiques.

9. Utilisation d'une saumure selon la revendication 8 dans une cellule électrolytique à membrane.

10. Utilisation du sel résultant du procédé de l'une quelconque des revendications précédentes dans un but de consommation.
